# EUROPEAN PATENT SPECIFICATION

(11) **EP 1 422 463 B1**
(45) Date of publication and mention of the grant of the patent: **22.10.2008**
(21) Application number: 03253143.6
(22) Date of filing: 20.05.2003
(51) Int. Cl.: F16L 37/092

(54) **A pipe coupling**
Rohrkupplung
Raccord de tuyau

(30) Priority: 22.11.2002 GB 0227325
(43) Date of publication of application: 26.05.2004
(73) Proprietor: Polypipe Building Products Ltd., Edlington, Doncaster DN12 1ES (GB)
(72) Inventor: Beaver, Andrew Robert, Stockmore, Huddersfield HD4 6XN (GB); Kelly, Keith, Doncaster DN12 3AZ (GB); Millward, Keith, Doncaster DN6 9AF (GB)
(74) Representative: Robertson, James Alexander

(56) References cited:
- EP-A- 0 663 557
- EP-A- 0 945 662
- US-A- 4 573 716
- US-A- 6 065 779

## Description

The invention relates to a pipe coupling, in particular a pipe coupling with provision for release of a pipe therefrom.

Releasable pipe couplings are known having a body having an aperture for receiving a pipe, a collet within the aperture for releasably securing the pipe in the aperture, the collet including a release part for releasing the pipe by axially applied inward pressure. A problem experienced with such couplings is one of accidental release, wherein the release part is activated inadvertently leading to leakage. Various attempts have been made to solve this problem, but most compromise the functionality of the original concept, making the couplings more expensive to produce, and more complicated to install. Furthermore, existing designs do not allow situations to be catered for where ease of release by any person is actually undesirable, such as for example in situations where installations are open to vandalism or theft. Relevant prior art includes US 6065779.

It is an object of the present invention to provide a pipe coupling which overcomes problems associated with existing couplings.

According to the invention there is provided a pipe coupling, comprising a body having an aperture for receiving a pipe, a collet within the aperture for releasably securing the pipe in the aperture, the collet including a release part for releasing the pipe by axially applied inward pressure thereon, and a guard having a bearing surface, the release part extending substantially axially from the aperture, the guard being adapted to present the bearing surface a distance equal to or greater than the axial extent of the release part, characterised in that the guard is not removable from the assembled pipe coupling. In this way the invention provides a pipe coupling which is simple in design and assembly, involves a minimum of additional parts, and which addresses specifically the problems of accidental release and unwanted release.

The guard may comprise a plurality of bearing surfaces. This makes the coupling particularly secure.

In one preferred form of the invention, for any given chord tangential to the circle defined by a pipe in the coupling, the guard has a bearing surface disposed to substantially prevent inward pressure on the release part.

The guard may comprise a ring disposed substantially coaxially with the aperture for receiving the pipe therethrough, the or each bearing surface being defined by a surface of the ring remote from the aperture. The ring may include one or more axial extension, the or each axial extension having a bearing surface.

Alternatively the guard may comprise one or more axial extension from a surface of the coupling defining the mouth of the aperture, the or each bearing surface being defined by a surface of a said axial extension. In this case it is preferred that the or each extension is integrally formed with the coupling, which makes the coupling simpler to manufacture and assemble.

The invention will further be described by way of examples with reference to the accompanying drawings in which:
Figure 1 is a sectional view of a first embodiment of pipe coupling according to the invention;
Figure 2 is an end view of the pipe coupling illustrated in Figure 1;
Figure 3 is an end view of a part of an alternative pipe coupling design according to the invention;
Figures 4 and 5 are respectively, sectional and end views of a further alternative pipe coupling design according to the invention;
Figures 6 and 7 are respectively, sectional and end views of a still further alternative pipe coupling design according to the invention; and
Figures 8 and 9 are part sectional views of a yet further alternative pipe coupling design according to the invention.

Referring to the drawings there is illustrated a pipe coupling 1 comprising a body 2 having an aperture 3 for receiving a pipe (not shown), a collet 4 within the aperture 3 for releasably securing the pipe in the aperture 3, the collet 4 including a release part 5 for releasing the pipe by axially applied inward pressure thereon, and a guard 6 having a bearing surface 6a, the release part 5 extending substantially axially from the aperture 3, the guard 6 being adapted to present the bearing surface 6a a distance equal to or greater than the axial extent of the release part 5.

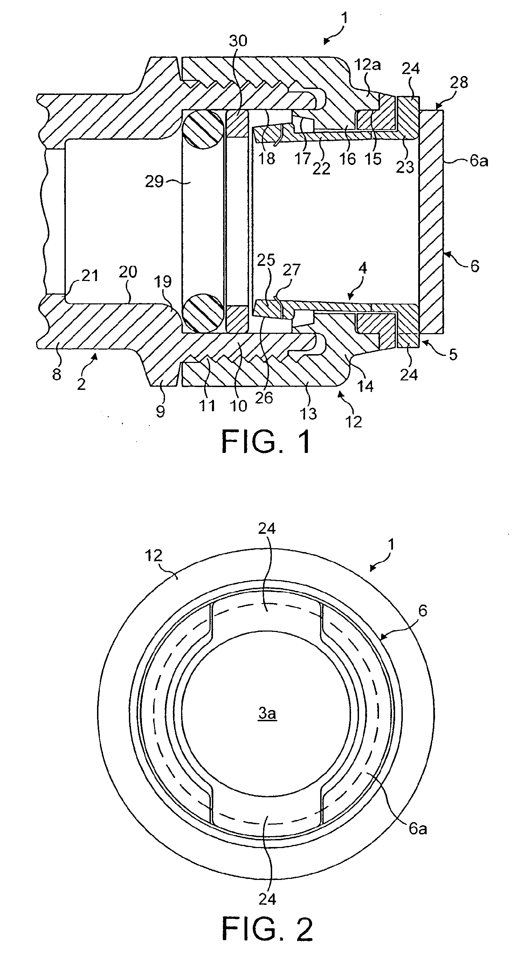

Referring particularly to Figure 1, the invention is embodied in the present example in the form of a coupling 1 which is used to releasably join pipes and fittings in a water supply system. For clarity, one end of the coupling is illustrated. It will be appreciated however that this invention is applicable to many different configurations of couplings such as straight fittings, 90 degree fittings, fittings including more than one aperture, and even taps.

The coupling 1 includes a cylindrical middle section 8 having a first diameter bordered by a circumferential flange 9 of wider diameter and an end section 10 of similar diameter to the middle section 8 and having on its outer surface a screw thread 11. The end section 10 has placed upon it in screw threaded engagement an end cap 12. The end cap 12 comprises a first cylindrical portion 13 having an internal screw thread and is dimensioned to screw on to the corresponding screw thread 11 of the end section 10. The cap 12 has a tapering portion 14 which defines the mouth of the aperture 3 in this embodiment.

When assembled with the cap 12 in place on the coupling 1 a bore 3a is defined. The bore 3a is dimensioned to accommodate a pipe of a given diameter and comprises, working from the mouth of the bore 3 a inwards, a first diameter 15, a shoulder 16, a tapered cam portion 17, a second diameter 18, a second shoulder 19, a third diameter 20 and a third shoulder 21.

The coupling 1 has a locking member 4 known as a collet which comprises four resilient, axially extending arms 22 extending from one side of a ring 23. The ring 23 has two opposing release tabs 24 (Figure 2) extending from its side remote from the arms 22 substantially normally to the axis of the arms. Each arm 22 has towards its distal end a thickening, with a nib 25, an outer cam surface 26 and a metal insert forming a tooth 27. By virtue of the fact that they are resilient the arms 22 can be radially compressed or radially expanded. Similar collets are well known in the art, the main difference being that known collets have a radially outwardly extending circumferential flange around the side remote from the arms 22.

The pipe coupling 1 is provided with a guard 6 which in this embodiment takes the form of a ring or washer disposed around the outside of the ring of the collet 4, between the mouth of the aperture 3 as defined by the end cap 12 and the release tabs 24 of the collet 4. One end face of the ring 6 is provided with two axially extending upstands 28 as can best be seen from Figure 1. Each upstand 28 has on its end a bearing surface 6a. When assembled in the coupling the upstands 28 extend axially from the aperture 3 a distance greater than the axial extent of the collet 4 from the aperture 3, as can be seen from Figure 1. In this embodiment the mouth of the cap 12 has an axially extending circumferential flange 12a and the guard ring 6 is dimensioned to fit within this flange at the mouth of the cap 12. It will also be noted that in this embodiment the upstands 28 occupy the major portion of the circumference of the circle defined by the release tabs 24 and bearing surfaces 6a (Figure 2).

Referring in particular to Figure 1, to assemble the coupling 1, an 'O'-ring seal 29 is first inserted into the bore 3a so that it seats against the second shoulder 19 in the second diameter 18. A washer 30 is then inserted to butt up against the 'O'-ring seal 29. The cap 12 is then applied to the end section 10 by means of the cooperating screw threads, the cap 12 being screwed on to the end section 10 until it butts up against circumferential flange 9. The collet 4 is then inserted into the guard ring 6, arms 22 first, so that the tabs 24 are received in the gaps between the upstands 28 and the assembly so formed is then inserted into the aperture 3. To accommodate the arms 22 they must be radially inwardly compressed to move past the shoulder 16 after which the arms 22 return to their original spacing due to the increased diameter of the bore at the second diameter 18. The collet 4 is prevented from entering the bore 3 completely by the tabs 24 butting against the guard ring 6.

In use, a pipe is inserted into the coupling so that its end butts up against the third shoulder 21. The 'O'-ring 29 provides a fluid tight seal around its outer circumference and the teeth 27 of the collet arms 22 resting on the surface. If it is attempted to withdraw the pipe from the coupling 1 the pipe plus loosely attached collet 4 moves axially to the right as viewed so that the outer cam surfaces 26 of the nibs 25 of the collet arms 22 are brought into contact with the tapered portion 17. This forces them inwardly, causing the teeth 27 to bite into the surface of the pipe. As the pipe surface impedes any further inward movement of the arms 22, further axial outward movement of the collet 4, and the pipe, is impeded.

As already mentioned, a problem which has been experienced with past configurations is that of accidental release of the pipe when for example the release part of the collet is accidentally pulled against other building elements such as joists particularly where the coupling 1 is located close to a hole in a joist through which the pipe runs. Thus it has been necessary to provide a coupling which addresses this problem, but which is still relatively straightforward to release intentionally. This is achieved in the present invention by the presence of the guard ring 6. When it is desired to release the pipe from the coupling, the user simply has to depress the release tabs 24 manually into the apertures between the upstands 28 whilst withdrawing the pipe. This has the effect of preventing the collet 4 moving against the tapering portion 17 so that when the pipe is withdrawn the collet remains in position with the nibs 25 in the wider diameter part 18 of the bore 3 so that the teeth 27 do not bite into the pipe surface.

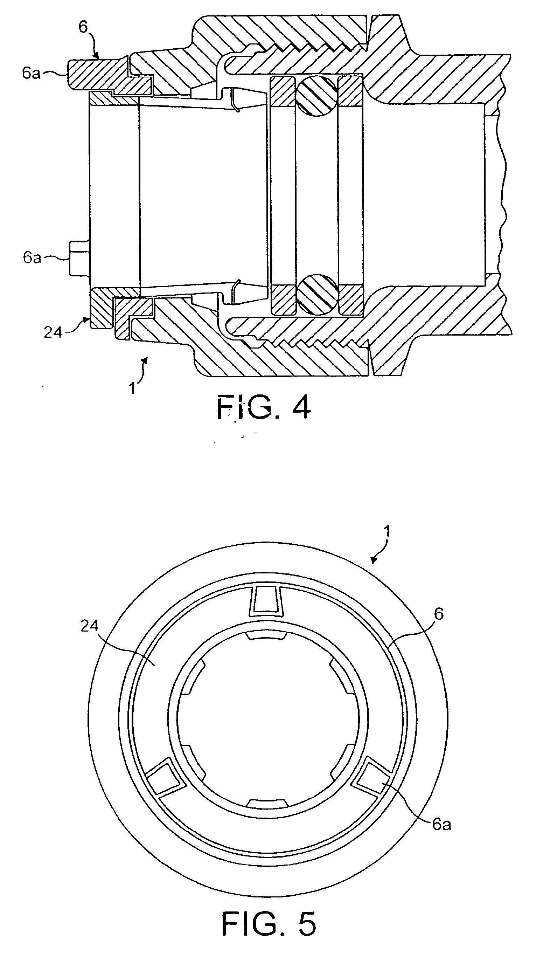

Referring now to Figures 4 and 5, there is illustrated an alternative design of coupling 1, which is similar to that previously described in all aspects, except that the release tabs 24 of the collet 4 have been formed to occupy a greater proportion of the circumference of the circle defined by the release tabs 24 and bearing surfaces 6a. In addition, there are three upstands 28 with bearing surfaces 6a, spaced equidistantly around this circumference. The effect of this is to make intentional releases of a pipe more easy in situations where the coupling is situated in inaccessible places. However, in operation this embodiment works in exactly the same way as the previously described embodiment.

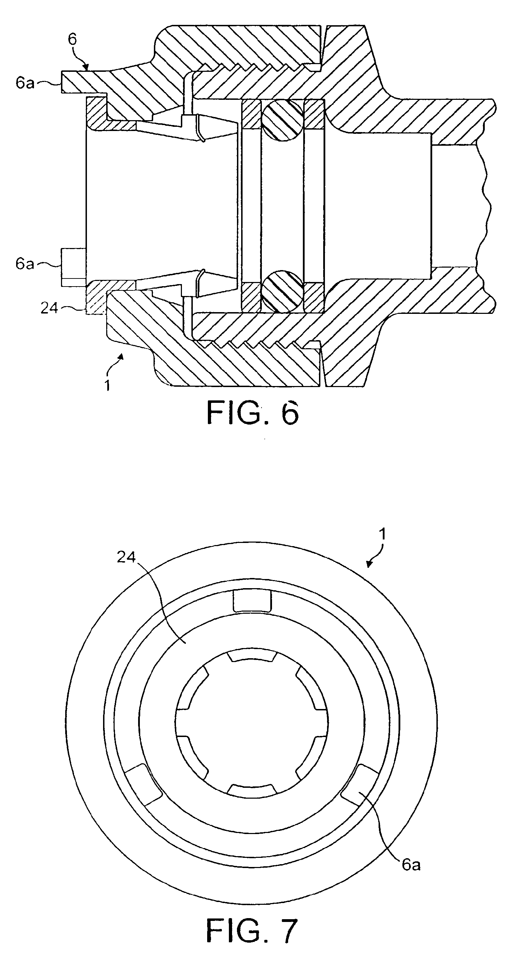

Referring now to Figures 6 and 7, there is illustrated a further alternative design of coupling 1, which is similar to those previously described in all respects, except that there is no separate guard ring 6. In this embodiment, the guard 6 is formed integrally with the end cap 12 in the form of three axially extending upstands 28 equally spaced around and integrally formed with a circumferential surface of the mouth of the end cap 12. As in the previously described embodiments, each upstand 28 has a bearing surface 6a to substantially prevent accidental release.

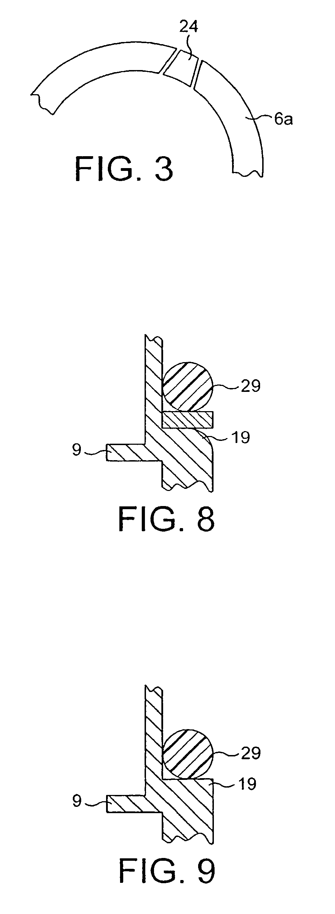

Referring now to Figures 8 and 9, an alternative design for the interior of the couplings is illustrated. The design featured in the previously described embodiments of Figures 4 and 5, and 6 and 7 includes two washers, one either side of the 'O'-ring seal. The washer to the left of the 'O'-ring helps prevent the 'O'-ring being displaced, (Figure 8) however, if the second shoulder 19 is moulded square (Figure 9) this washer can be omitted.

Referring now to Figure 5, an alternative design of collet release tabs 24 is illustrated. In this design, the area of the release tab 24 available for a user to press on has been maximised without compromising the effectiveness of the invention, by forming the upstands of the guard 6 with side walls which are not parallel, but taper towards one another towards the outer circumference of the ring, thus maximising the useful area of the release tabs 24 at the outer arc of the circumference without diminishing the effectiveness of the invention.

Referring now to Figure 3, a yet further alternative design of pipe coupling 1 according to the invention is illustrated. In this design the area of the release tabs 24 has been minimised, the bearing surfaces 6a occupying the majority of the circumference of the circle defined by the release tabs 24 and bearing surfaces 6a. As will be appreciated, in this embodiment the invention provides a coupling which makes intentional release more difficult, thereby helping to guard against unauthorised release. The dimensions of the release tabs 24 and bearing surfaces 6a can be varied in this case so that release can only realistically be effected using a specially made tool. In this case it would be positively advantageous for the upstands 28 to extend axially further than the release tabs 24, so that the release tabs 24 are recessed between the upstands 28 making unauthorised release even more difficult. In plan, the upstands 28 could be shaped as in any of the embodiments described herein.

## Claims

1. A pipe coupling (1), comprising a body (2) having an aperture (3) for receiving a pipe, a collet (4) within the aperture (3) for releasably securing the pipe in the aperture (3), the collet (4) including a release part (5) for releasing the pipe by axially applied inward pressure, and a guard (6) having a bearing surface (6a), the release part (5) extending substantially axially from the aperture (3), the guard (6) being adapted to present the bearing surface (6a) a distance equal to or greater than the axial extent of the release part (5), **characterised in that** the guard (6) is not removable from the assembled pipe coupling (1).

2. A coupling (1) according to claim 1, wherein the guard (6) comprises a plurality of bearing surfaces (6a).

3. A coupling (1) according to claim 1 or claim 2, wherein for any given chord tangential to the circle defined by a pipe in the coupling (1), the guard (6) has a bearing surface (6a) disposed to substantially prevent inward pressure on the release part (5).

4. A coupling (1) according to any preceding claim, the guard (6) comprising a ring disposed substantially coaxially with the aperture (3) for receiving the pipe therethrough, the or each bearing surface (6a) being defined by a surface of the ring remote from the aperture (3).

5. A coupling (1) according to claim 4, the ring including one or more axial extension (28), the or each axial extension (28) having a said bearing surface (6a).

6. A coupling (1) according to any of claims 1 to 3, the guard (6) comprising one or more axial extension from a surface of the coupling defining the mouth of the aperture, the or each bearing surface (6a) being defined by a surface of a said axial extension.

7. A coupling (1) according to claim 6, the or each axial extension being integrally formed with the coupling.

8. A coupling (1) according to any preceding claim, the release part (5) and the or each bearing surface (6a) defining a circle, the or each bearing surface (6a) occupying the majority of the circumference of the said circle.

## Patentansprüche

1. Rohrkupplung (1), die einen Körper (2), der eine Öffnung (3) zum Aufnehmen eines Rohres hat, eine Hülse (4) innerhalb der Öffnung (3) zum lösbaren Befestigen des Rohres in der Öffnung (3), wobei die Hülse (4) einen Freigabeteil (5) zum Lösen des Rohres durch in Axialrichtung ausgeübten nach innen gerichteten Druck einschließt, und einen Schutz (6), der eine Lagerfläche (6a) hat, umfasst, wobei sich der Freigabeteil (5) im Wesentlichen in Axialrichtung von der Öffnung (3) aus erstreckt, wobei der Schutz (6) dafür eingerichtet ist, die Lagerfläche (6a) in einem Abstand darzubieten, die gleich der axialen Ausdehnung des Freigabeteils (5) oder größer als dieselbe ist, **dadurch gekennzeichnet, dass** der Schutz (6) nicht von der zusammengebauten Rohrkupplung (1) abgenommen werden kann.

2. Kupplung (1) nach Anspruch 1, wobei der Schutz (6) mehrere Lagerflächen (6a) umfasst.

3. Kupplung (1) nach Anspruch 1 oder Anspruch 2, wobei der Schutz (6) für eine beliebige gegebene Sehne, tangential zu dem Kreis, der durch ein Rohr in der Kupplung (1) definiert wird, eine Lagerfläche (6a) hat, die dafür angeordnet ist, im Wesentlichen einen nach innen gerichteten Druck auf den Freigabeteil (5) zu verhindern.

4. Kupplung (1) nach einem der vorhergehenden Ansprüche, wobei der Schutz (6) einen Ring umfasst, der im Wesentlichen koaxial mit der Öffnung (3) angeordnet ist, um das Rohr durch denselben aufzunehmen, wobei die oder jede Lagerfläche (6a) durch eine von der Öffnung (3) entfernte Fläche des Rings definiert wird.

5. Kupplung (1) nach Anspruch 4, wobei der Ring eine oder mehrere axiale Erweiterungen (28) einschließt, wobei die oder jede axiale Erweiterung (28) eine Lagerfläche (6a) hat.

6. Kupplung (1) nach einem der Ansprüche 1 bis 3, wobei der Schutz (6) eine oder mehrere axiale Erweiterungen von einer Fläche aus umfasst, welche die Mündung der Öffnung definiert, wobei die oder jede Lagerfläche (6a) durch eine Fläche der axialen Erweiterung definiert wird.

7. Kupplung (1) nach Anspruch 6, wobei die oder jede axiale Erweiterung integral mit der Kupplung geformt ist.

8. Kupplung (1) nach einem der vorhergehenden Ansprüche, wobei der Freigabeteil (5) und die oder jede Lagerfläche (6a) einen Kreis definieren, wobei die oder jede Lagerfläche (6a) den Großteil des Umfangs des Kreises einnimmt.

## Revendications

1. Raccord de tuyau (1), comprenant un corps (2) comportant une ouverture (3) pour recevoir un tuyau, une douille de serrage (4) dans l'ouverture (3) pour fixer de manière amovible le tuyau dans l'ouverture (3), la douille de serrage (4) englobant une partie de dégagement (5) pour dégager le tuyau par l'intermédiaire d'une pression vers l'intérieur à application axiale, et un dispositif de protection (6) comportant une surface de support (6a), la partie de dégagement (5) s'étendant pratiquement dans une direction axiale à partir de l'ouverture (3), le dispositif de protection (6) étant adapté pour présenter la surface de support (6a) sur une distance égale ou supérieure à l'extension axiale de la partie de dégagement (5), **caractérisé en ce que** le dispositif de protection (6) ne peut pas être retiré du raccord de tuyau assemblé (1).

2. Raccord (1) selon la revendication 1, dans lequel le dispositif de protection (6) comprend plusieurs surfaces de support (6a).

3. Raccord (1) selon les revendications 1 ou 2, dans lequel, pour une quelconque corde tangentielle définie par rapport au cercle défini par un tuyau dans le raccord (1), le dispositif de protection (6) comporte une surface de support (6a) agencée de sorte à empêcher pratiquement l'application d'une pression vers l'intérieur à la partie de dégagement (5).

4. Raccord (1) selon l'une quelconque des revendications précédentes, le dispositif de protection (6) comprenant une bague agencée de manière pratiquement coaxiale à l'ouverture (3), pour recevoir le tuyau à travers celle-ci, la ou chaque surface de support (6a) étant définie par une surface de la bague éloignée de l'ouverture (3).

5. Raccord (1) selon la revendication 4, la bague englobant une ou plusieurs extensions axiales (28), la ou chaque extension axiale (28) comportant une dite surface de support (6a).

6. Raccord (1) selon l'une quelconque des revendications 1 à 3, le dispositif de protection (6) comprenant une ou plusieurs extensions axiales d'une surface du raccord définissant l'embouchure de l'ouverture, la ou chaque surface de support (6a) étant définie par une surface d'une dite extension axiale.

7. Raccord (1) selon la revendication 6, la ou chaque extension axiale étant formée d'une seule pièce avec le raccord.

8. Raccord (1) selon l'une quelconque des revendications précédentes, la partie de dégagement (5) et la ou chaque surface de support (6a) définissant un cercle, la ou chaque surface de support (6a) occupant la majeure partie de la circonférence dudit cercle.
